# EUROPEAN PATENT SPECIFICATION

(11) **EP 0 367 525 B1**
(45) Date of publication and mention of the grant of the patent: **05.06.1996**
(21) Application number: 89311165.8
(22) Date of filing: 30.10.1989
(51) Int. Cl.: B01D 3/00, F28F 25/04, B01J 4/00

(54) **Liquid distributor assembly for packed tower**
Flüssigkeitsverteiler für einen Füllkörperturm
Distributeur de liquide pour une tour à garnissage

(30) Priority: 03.11.1988 US 266886
(43) Date of publication of application: 09.05.1990
(73) Proprietor: GLITSCH, INC., Dallas Texas 75266 (US)
(72) Inventor: Binkley, Michael J., Texas 75115 (US); Martinenghi, Paolo, Pavia (IT); Petrich, Tullio, Pavia (IT)
(74) Representative: Hitchcock, Esmond Antony

(56) References cited:
- EP-A- 0 112 978
- EP-A- 0 289 201
- DE-A- 1 442 929
- FR-A- 2 629 191
- GB-A- 1 179 293
- US-A- 4 264 538
- US-A- 4 444 696

## Description

The present invention pertains to liquid distributors for vapor-liquid contact towers and, more particularly, to a distributor tube assembly for columns incorporating counter-current, vapor-liquid flow therethrough.

It is well known in the prior art to utilize various types of exchange columns in which a gas and a liquid come into contact with one another, preferably in a counter-current flow for purposes of mass or heat transfer, close fractionation and/or separation of feed stock constituents, and other unit operations. Efficient operation requires mass transfer, heat transfer, fluid vaporization and/or condensation, whereby one of the fluids can be cooled with a minimum pressure drop through and in a particular zone or zones of minimum dimensions defining the area and volume thereof. These are pre-requisites of efficient operation and are necessary for close fractionation. For this reason, counter-current flow of vapor and liquid within such exchange columns have become established methods of such vapor-liquid contact in the prior art. The actual vapor-liquid interface requires the utilization of a packing bed within the column. Liquid is then distributed atop the packing bed in the most feasible manner while vapor is distributed beneath the packing bed in the lower region of the tower. In this manner liquid trickling downwardly through the packing bed is exposed to the vapor ascending therethrough for vapor-liquid contact and interaction.

It is well established that the configuration of the packing bed determines the pressure drop, efficiency of the vapor-liquid interface and the concomitant mass and energy transfer occurring in a process tower. The means for effective and even distribution of the vapor and the liquid on opposite ends of the packing bed as well as maintenance of that distribution therethrough are critical to an efficient operation. Only with efficient initial vapor and liquid distribution and the maintenance of said distribution throughout the packing bed, will homogenous mixing zones be created therethrough for maximizing the efficiency therein. Efficiency is readily convertible to cost of operation and production quality. For this reason, a myriad of prior art packing designs have been prevalent in conventional exchange columns. The efficiency of the packing is, however, limited to a large extent by the efficiency of the vapor and liquid distribution thereacross. For example, failure of either vapor or liquid to evenly distribute over cross sections of the packing effectively eliminates the utility of the part of the packing where there is poor or no distribution which in turn is directly proportional to the efficiency and cost effectiveness of the operation. The packing bed depths are critical in establishing production criteria and operational costs and failure to evenly distribute vapor-liquid and/or maintain homogeneity within the packing bed can lead to serious consequences, particularly in the petroleum refining industry.

Aside from the packing beds themselves, the liquid distributor is the most important unit of a tower internal. Failure in performance of a packed tower sometimes stems from liquid distribution problems such as clogging or uneven distribution, and thus the selection of a correct liquid distributor is critical for uninterrupted plant operation. Operational considerations thus include the functional aspects of the distributor, such as how level the distributor troughs are maintained, how well the floor is equalized therethrough, and the means through which the liquid is distributed from the troughs to the packing beds there beneath. Also considered is the effect which the ascending vapor has on the liquid being distributed. When vapor flow areas are restricted flow velocity can increase to the point of interrupting the descending flow pattern. The liquid is, in essence, "blown" around, and this condition can lead to uneven distribution and inefficiency in the process column. U.S. Patent Nos. 4,264,538 and 4,557,877, to which reference is directed, each disclose a liquid distributor arrangement for use in an exchange column, in which specific attention is given to achieving uniform spread of liquid across the distributor while minimising the pressure drop experienced by the gas flowing upwardly therethrough.

Conventional liquid distributors generally include the multi-orifice spray head variety adapted for dispersing liquid in the form of a spray atop a packing bed. In the utilization of dump packing wherein a plurality of random oriented packing elements are disposed, within the exchange column, such a liquid distribution technique is sometimes effective. This is true particularly when high efficiency parameters are not of critical significance. However, in the event of high efficiency packing such as that set forth in U.S. Patent No. 4,604,247 assigned to the assignee of the present invention, means for homogeneous liquid and gas distribution are of extreme importance.

The cost of high efficiency packing of the type set forth in the aforesaid patent commands attention to proper vapor-liquid distribution. Even small regions of non-homogenous interaction between the vapor and liquid is an expensive and wasteful loss not consistent with the utilization of high efficiency packing, where space and homogeneity in vapor-liquid interface is both expected and necessary for proper operation. High efficiency packing of the state of the art varieties set forth and shown in the aforesaid U.S. Patent requires counter-current vapor-liquid flow through the channels defined by opposed corrugations of sheets disposed therein. If the initial liquid or gas distribution fails to enter a particular corrugation pattern, then precious surface area is lost in the packing until the liquid and vapor are urged to migrate into and interact through the unfilled regions of the packing. Only by utilizing proper vapor and liquid distribution means may effective and efficient utilization of high efficiency packing as well as conventional dumping packing be assured.

The development of systems for adequate liquid distribution in process towers has been limited as set forth above. In the main, it is known to discharge and distribute liquids with spray orifices, pipes, perforated plates, apertured troughs and nozzles. Gas is concomitantly discharged in an ascending turbulent configuration to provide adequate vapor distribution. Although many prior art systems are generally effective in distributing some vapor and some liquid to most portions of the packing bed, uniform distribution thereacross is usually not obtained without more sophisticated distribution apparatus. For example, unless gas is injected into a myriad of contiguous areas beneath the packing bed with equal pressure in each area, the mass flow of vapor upwardly through the packing bed cannot be uniform. Random vapor discharge simply distributes unequal amounts of vapor across the lower regions of the packing bed but does not in any way assure equality in the distribution. Likewise the simple spray of liquid atop the packing bed, though intended to be effective in wetting all surface areas, often results in high concentrations of liquid flow in certain packing bed areas and less flow in others. This, of course, depends on the spray device. Orifice distributors are generally more susceptible to plugging than other types of distributors, and plugging is generally non-uniform leading to uneven irrigation within the tower. Surface irregularities in a distributor pan occurring during manufacture likewise increase flow resistance of some perforations or induce liquid flow along the bottom of the pan which is a distinct disadvantage. Any flow irregularity which focuses the flow in one area while reducing flow in other areas is deleterious.

It has been discovered that with pipe distributors consisting of headers equipped with tributary pipes or laterals that have holes or nozzles to spray liquid, the liquid is often distributed too finely. Tiny drops of the liquid then get carried out of the tower by counter-current gas flow. This prevents the liquid from even coming in contact with the packing bed. Since liquid contact is the purpose of the packing therebeneath, such a result totally frustrates the intent of the liquid distributor. As much as 5% of the liquid flowing through a nozzle can be converted to mist at a pressure drop of 140 kPa (20 psi). It has also been noted that nozzle equipped pipe distributors can produce overlapping spray patterns which result in increased flow in certain areas with reduced flow in other areas. Moreover, spray headers also release liquid at speeds that can cause it to pass vertically through the packing before it has a chance to spread out horizontally depending on the particular packing type.

These issues are important as well as the critical issue of the number of liquid distribution points necessary for various tower diameters, packings, heights, materials and systems. It is critical that the packing height not be too great wherein the weight of the packing will cause it to crush itself. However, liquid redistributors between packing sections are expensive and take up heights that could otherwise be used for mass transfer. One consideration is the type of packing being used. Structured packing can tolerate very little maldistribution while dump packing on the other hand can sustain larger variations in liquid distribution.

Unfortunately, the manifestation of uneven liquid distribution generally occurs in the vicinity of the most even, or uniform, vapor distribution. The opposite is also true. This is because vapor has had a chance to more evenly distribute through the packing bed prior to engaging the liquid distribution flow. It would be an advantage, therefore, to provide means for even liquid and vapor distribution prior to entry of said vapor and liquid into the packing bed and in a manner providing both a uniform spread of said liquid and vapor and uniform volumetric distribution thereof.

The present invention is directed at a liquid flow distributor for disposition in a process column over a packing section for the distribution of liquid downwardly therethrough, which distributor has a plurality of elongate troughs spaced over the area thereof to provide for substantially uniform distribution of liquid, the troughs being formed with opposite side walls having holes for spewing liquid outwardly therefrom, and a plurality of distributor tube assemblies disposed externally of the troughs, and depending below the troughs for discharging liquid therefrom, each assembly being in flow communication with at least one of the holes. According to the invention substantially all the tube assemblies each comprise a first channel section of generally U-shaped cross-section with its base laying against a trough side wall and at least one opening in registry with a hole in such side wall, and a second channel section of generally V-shaped cross-section removably received in the first section with its open face against the base of the first section. The tube assemblies depend below the troughs to prevent disturbing the rising vapor flow at the point of liquid discharge. The end of the side walls of the first channel may be tapered for securing the second channel therein and forming a triangular flow conduit for receiving the discharge of flow from the trough. The invention enables the advantages of distributor tubes to be provided in the configuration, facilitating the cleaning of the trough and the flow apertures by the removal of the second channel section from the first channel section. Liquid flow efficiency is thus provided in a more cost efficient, reliable configuration.

In a preferred embodiment of the invention the first channel sections are bolted and/or welded to the side walls of the troughs. They are constructed with opposite side wall flanges that taper one toward the other, normally at the same angle relationship, the second channel section may then be received within the first and be of a V-shaped cross-section with side walls formed at angles complementary to those of the first channel section. It is preferable for the second channel section to be slidably mounted within the first channel section and secured therein by a pin disposed therein or by an inwardly flared region of the first channel section which is constructed for engaging the second channel section and preventing its passage therethrough.

The invention will now be further described by way of example with reference to the accompanying drawings wherein:
FIG. 1 is a perspective view of a packed column with various sections cut away for illustrating a variety of tower internals and one embodiment of a liquid flow distributor trough constructed in accordance with the principles of the present invention disposed therein;
FIG. 2 is an enlarged side elevational, cross-sectional view of the liquid flow distributor trough of FIG. 1 taken along lines 2-2 thereof having a plurality of removable distributor tube assemblies on opposite sides thereof and constructed in accordance with the principles of the present invention;
FIG. 3 is an enlarged top plan, cross-sectional view of the trough of FIG. 2 taken along lines 3-3 thereof and illustrating the placement of the removable distributor tube assemblies therealong;
FIG. 4 is an enlarged, perspective view of the flow distributor array of the present invention illustrating a multitude of distributor tube assemblies assembled thereto in accordance with the principles of the present invention;
FIG. 5 is an enlarged top plan, fragmentary view of the flow distribution trough of FIG. 2 illustrating the construction of the removable distributor tube assembly thereof;
FIG. 6 is an enlarged side elevational view of the trough of FIG. 2 illustrating the flow of liquid therethrough; and
FIG. 7 is a perspective view of the tube assembly of FIG. 6 illustrating the removal of a section of the tube therefrom in accordance with the principles of the present invention.

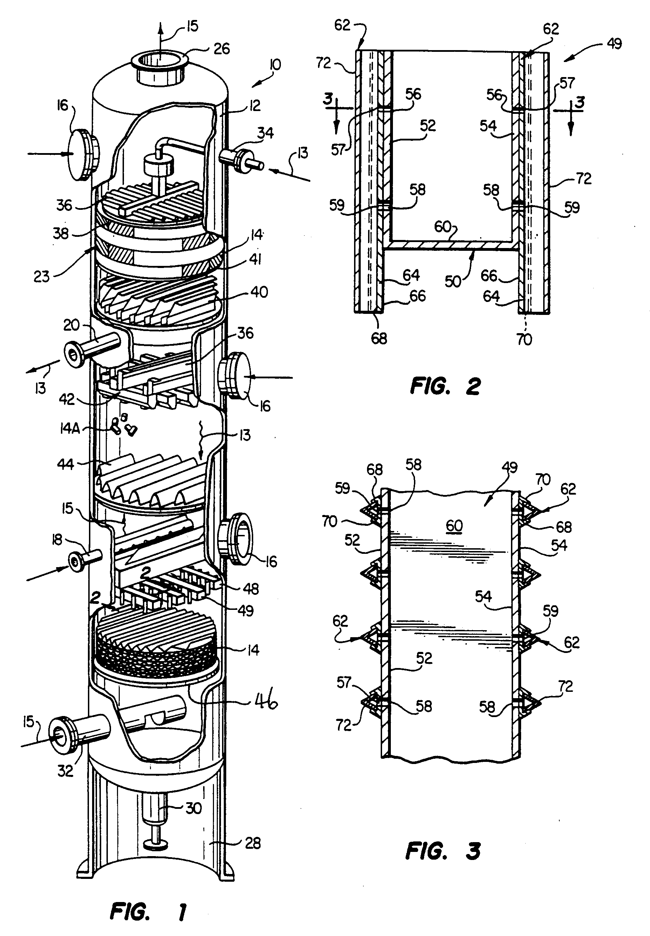

Referring first to FIG. 1, there is shown a perspective view of a packed exchange tower or column with various sections cut away for illustrating a variety of internals and the utilization of one embodiment of the liquid distributor of the present invention. The exchange column 10 of FIG. 1 comprises a cylindrical tower 12 having a plurality of packing bed layers 14 disposed therein. A plurality of manways 16 are likewise constructed for facilitating access to the internal region of the tower 12 for replacement of the packing beds 14. Also provided are side stream draw off line 20, liquid side feed line 18, and side stream vapor feed line or reboiler return line 32. A reflux return line 34 is provided atop the tower 10.

In operation, liquid 13 is fed into the tower 10 through reflux return line 34 and side stream feed input feed line 18. The liquid 13 flows downwardly through the tower and ultimately leaves the tower either at side stream draw off 20, or at bottom stream draw off line 30. In its downward flow, the liquid 13 is depleted of some material which evaporates from it as it passes through the packing beds, and is enriched or added to by material which condenses into it out of the vapor stream.

Still referring to FIG. 1 the exchange column 10 further includes a vapor outlet, overhead line 26 disposed atop the tower 12 and a lower skirt 28 disposed in the lower region of the tower around bottom stream takeoff line 30 coupled to a reboiler (not shown). Reboiler return conduit 32 is shown disposed above the skirt 28 for recycling vapor therein upwardly through the packing layers 14. Reflux from condensers is provided in the upper tower region 23 through entry conduit 34 wherein reflux is distributed throughout a liquid distributor 36 across upper packing bed 38. It may be seen that the upper packing bed 38 is of the structured packing variety. The regions of the exchange column 10 beneath the upper packing bed 38 are shown for purpose of illustration and include a liquid collector 40 disposed beneath a support grid 41 is support of the upper structured packing 38. A liquid redistributor 42 is likewise disposed there beneath and an intermediate support plate 44 is provided in an alternative configuration of the type adapted for supporting random packing 14A of a ring or saddle variety as representatively shown. A lower grid 46 supporting further packing layers 14 is illustrated disposed beneath a liquid distributor 48 comprising a plurality of troughs 49 adapted for dispersing the liquid 13 thereacross in counter-current flow to the ascending vapor there beneath. It may be seen from this figure that the counter-current configuration between the ascending vapor 15 and the descending liquid is the subject of a plurality of critical design considerations including liquid/vapor ratios, liquid cooling, foaming and the presence of solids or slurries therein. Corrosion is likewise a consideration of the various elements in the packed towers and the selection of the material in the fabrication of the tower internals is in many instances the results thereof. The anatomy of the packed column as shown in FIG. 1 is likewise described in more detail in an article by Gilbert Chen entitled "Packed Column Internals" appearing in the March 5, 1984 edition of Chemical Engineering.

Referring now to FIG. 2 there is shown an enlarged end elevational cross-sectional view of a trough 49 having a lower body section 50. The trough section 50 is comprised of outer walls 52 and 54 upstanding from a bottom surface 60. A series of upper apertures 56 and lower apertures 58 are formed in the side walls 52 and 54 for purposes of allowing liquid flow outwardly of the trough 49. Outwardly of the apertures 56 and 58 is a removable distributor tube assembly adapted for receiving the flow of liquid therefrom and channeling said liquid downwardly into a packing bed there beneath (not shown). Each tube assembly 62 comprises a modified U-shaped channel 64 that is secured to the side wall of the trough 49 by arc welding or the like. The channel 64 is constructed with a substantially planar base wall 66 and two upstanding side wall lips 68 and 70. Only one of the side walls 68 and 70 are shown on opposite sides of trough 49 in FIG. 2 because of the cross-sectional angle, and then only in phantom. They are shown more clearly and in detail below. What is shown is an aperture 57 formed in base wall 66 in line with aperture 56 and an aperture 59 formed in base wall 66 in lien with aperture 58. A generally V-shaped channel 72 of mating size is received within the U-shaped channel 64 in slidable engagement therewith providing the necessary assemblage for serving as a flow distributor drip tube that is both efficient and removable. The removable aspect will be discussed in more detail below but it may be appreciated that its removability feature facilitates cleaning of the apertures 56 and 58 which can easily become clogged during normal process tower operations.

Referring now to FIG. 3 there is shown a top plan view of the distributor trough 49 wherein a plurality of drip tube assemblies 62 are shown. The bottom 60 is shown between the apertures 58 of walls 52 and 54. The tube assemblies 62 are each secured to the outer walls 52 and 54, and provide the necessary flow channeling therethrough. The V-shape of channel 72 and modified U-shape of channel 64 is more clearly shown. The slidable, interlocking engagement can be better appreciated in this view.

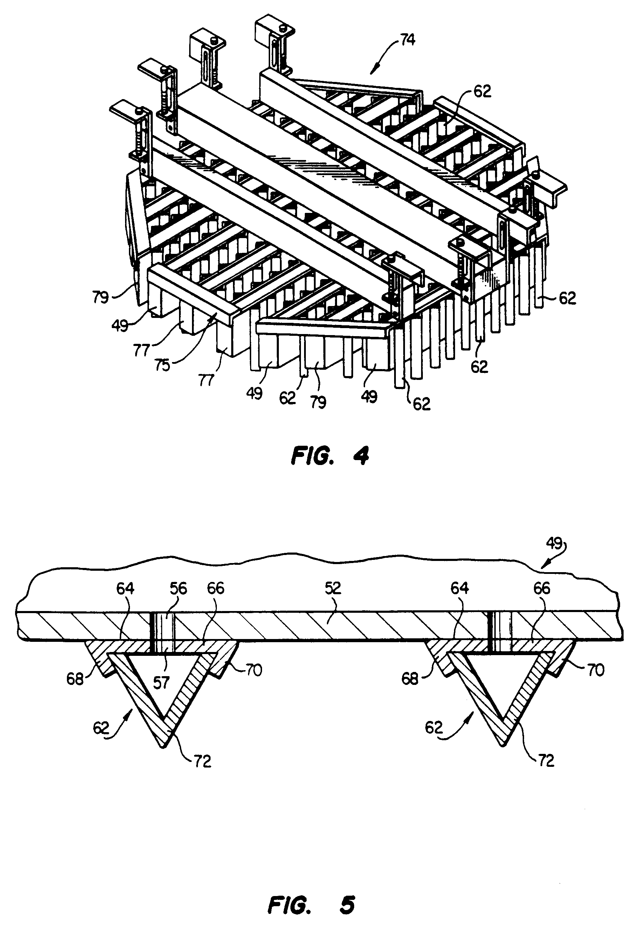

Referring now to FIG. 4 there is shown a plurality of troughs 49 constructed in accordance with the principles of the present invention and secured one to the other into an array 74 by a frame network 75. It may be seen that the tubes 62 depend downwardly from the troughs 49 in this perspective view. Trough ends 77 are of a shorter length and angle in certain sections of the assembly; for purposes of being received within a round process tower. In many instances the trough ends 77 include an angulated end face 79 for purposes of fitting within a cylindrical process tower such as that shown in FIG. 1. The drip tubes 62 depending from the troughs 49 are thus positioned for providing uniform liquid flow therefrom as well as providing means for maintaining the integrity of the flow system during standard maintenance operation. This particular type of array construction is further described in U.S. Patent No. 4,729,857 assigned to the assignee, of the present invention.

Referring now to FIG. 5 there is shown an enlarged top plan, cross-sectional view of a distributor tube assembly 62 constructed in accordance with the principles of the present invention. Each tube assembly comprises the back section 66 described above which is secured to the side wall 52 or 54 of the trough 49 by bolting, riveting, arc welding or the like. Side wall 52 is illustrated in this view. The apertures 56 are aligned therein for permitting liquid flow from the trough 49 into the tube assembly through aperture 57. Opposite sides 68 and 70 of the U-shaped channel 64 are angulated inwardly at a slight angle (on the order of 60 degrees) in order to facilitate securement of the generally V-shaped channel or pipe member 72 therein. It may be seen that the pipe member 72 therein is of substantially equivalent size and has a side wall angle substantially equal to the angle created by the side wall 68 and 70 relative to the base wall 66 of the generally U-shaped channel 64. In the present embodiment an equilateral triangle is created wherein each angle has an arc of approximately 60 degrees. This angle is only preferable, not critical. It may further be seen that the width of the channel 72 at its base is slightly less than the width of the inside dimension of the U-shaped channel 64 between the inside walls 68 and 70 for purposes of facilitating the slip fit inter- engagement.

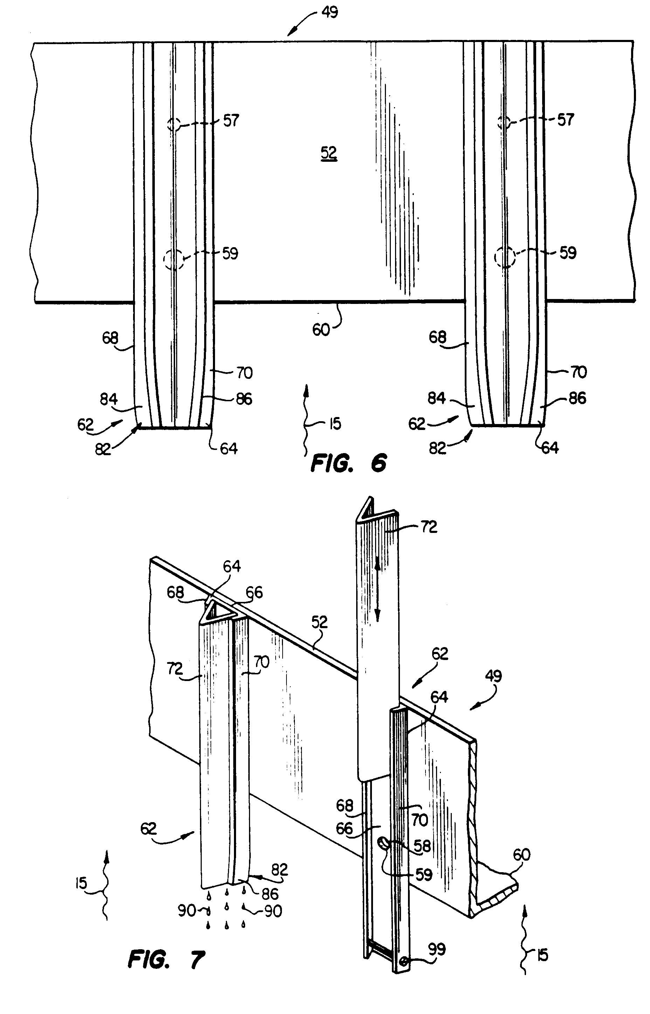

Referring now to FIG. 6 there is shown a side elevational view of the trough 49 having a drip tube assemblies 62 assembled thereto with the flow of liquid therefrom. In this view it may be seen that lower regions 82 of each channel 64 are slightly tapered by tapered sections 84 and 86. These tapered sections 84 and 86 are angled inwardly for squeezing or sandwiching the V-shaped tube 72 within the channel 64. This prevents the tube from sliding downwardly and out of the select flow configuration. It also provides an inexpensive yet reliable means for securing the inter-engagement between the V-shaped tube and the U-shaped channel, 72 and 64, respectively. Other securing methods may be used and an alternative construction is described below. The flow of liquid from the tubes is illustrated by a plurality of droplets 90 which may be seen to form a multitude of streams, in some instances at least three separate streams. This three-sided flow pattern is achieved by virtue of the three sides of the triangular configuration as shown above. The fluid flow has a propensity for accumulating in the corners during descending flow thereby increasing the droplet size and maximizing its resistance to disruption by ascending vapor flow. In this manner the tube assembly is efficient in overcoming many of the disadvantages of standard distributor arrangements. It may also be seen that by positioning the U-shaped channels 64 below the bottom 60 of the trough 49, the removable V-shaped tube 72 completes its formation of a tubular conduit at a point disposed sufficiently beneath the trough 49 so as to be outside the area of maximum turbulence. This turbulence is created when the ascending vapor 15 engages the substantially planar section of the bottom of the trough 60. Although other drip tube configurations and distributors dispose the tubes downwardly of the distributor trough, in the present embodiment, the tube assembly 62 comprises at least two parts and in a configuration allowing sufficient access to the apertures 57 and 59 providing the liquid flow communication to permit cleaning and proper maintenance thereof. The construction of the channel 64 and V-shaped tube section 72 from stainless steel or the like has been shown to be acceptable in producing the efficiency, reliability and flow pattern described herein. It should be noted in particular that the material of the channels 64 and 72 do not have to match each other or the trough. This allows flexibility in material choice for particular applications.

Referring now to FIG. 7 there is shown a perspective view of a tube assembly 62 of FIG. 6 with one of the outer channels 72 being removed upwardly therefrom. The channel is shown in a upwardly positioned configuration maintaining a sliding relationship with the U-shaped channel 64. In this view the apertures 58 and 59 are exposed in the side wall 52 of the trough 49. It is in this position that cleaning of said apertures is possible in accordance with the principles of the present invention. Also shown in this FIG. 7 is an alternative embodiment of retaining means for the V-shaped channel 72. Instead of tapered, or inwardly flared, regions 84 and 86, the U-shaped channel 64 has untapered side walls with a pin assembly 99 extending therethrough for retaining the V-shaped channel 72 therein.

## Claims

1. A liquid flow distributor (48) for disposition in a process column (10) over a packing section (14) for the distribution of liquid downwardly therethrough, which distributor has a plurality of elongate troughs (49) spaced over the area thereof to provide for substantially uniform distribution of liquid, the troughs being formed with opposite side wafts (52,54) having holes (56,58) for spewing liquid outwardly therefrom, and a plurality of distributor tube assemblies (62) disposed externally of the troughs (49), and depending below the troughs (49) for discharging liquid therefrom, each tube assembly being in flow communication with at least one of the holes (56,58),
CHARACTERISED IN THAT
substantially all the tube assemblies (62) each comprise a first channel section (64) of generally U-shaped cross-section with its base laying against a trough side wall (52,54) and at least one opening (57,59) in registry with a hole (56,58) in such side wall, and a second channel section (72) of generally V-shaped cross-section removably received in the first section (64) with its open face against the base (66) of the first section (64).

2. A distributor according to Claim 1 wherein each first channel section (64) is bolted to a wall (52,54) of a respective trough (49).

3. A distributor according to Claim 1 wherein each first channel section (64) is welded to a wall (52,54) of a respective trough (49).

4. A distributor according to any preceding Claim wherein the sides (68,70) of the first channel section (64) converge in a direction away from the base thereof.

5. A distributor according to Claim 4 wherein the sides (68,70) of the first channel section (64) converge substantially symmetrically.

6. A distributor according to any preceding Claim wherein the second channel section (72) is slidably mounted within the first channel section (64).

7. A distributor according to Claim 6 wherein the second channel section (72) is secured within the first channel section (64) by a pin (99) disposed in the first channel section (64).

8. A distributor according to Claim 6 including retaining means disposed in the first channel section (64) for holding the second channel section (72) within the first channel section (64).

9. A distributor according to Claim 8 wherein the retaining means comprises an inwardly flared region (84,86) of the first channel section (64) for preventing passage therethrough of the second channel section (72).

10. A distributor according to any preceding Claim wherein the troughs (49) are disposed in generally parallel spaced relationship over the area thereof.

11. A distributor according to Claim 10 wherein said troughs (49) are of a box construction with generally parallel side walls (52,54) and a substantially flat bottom section (60).

12. A distributor according to any preceding Claim wherein ends of select ones of the troughs (49) are constructed with angulated sections (79) for facilitating securement within cylindrical process columns (10).

13. A distributor according to Claim 12 wherein certain of the troughs (49) having angulated end sections (79) are of reduced length.

14. A distributor according to any preceding Claim wherein the distributor tube assemblies (62) are disposed in a substantially parallel spaced relationship.

15. A distributor according to any preceding Claim wherein at least some of the tube assemblies (62) are in flow communication with at least two of the holes (56,58) in the trough side walls (52,54).

16. A distributor according to Claim 15 wherein said two holes (56,58) are formed one above the other, and wherein one (58) is larger than the other (56).

## Patentansprüche

1. Flüssigkeitsverteiler (48) für eine Prozeßkolonne (10), angeordnet oberhalb eines Packungsbereichs (14), zum Verteilen von abwärtsströmender Flüssigkeit, mit einer Anzahl von Längsrinnen (49), die über die Fläche im Abstand zueinander verteilt sind, um eine im wesentlichen gleichmäßige Verteilung der Flüssigkeit zu schaffen, wobei die Längsrinnen sich gegenüberliegende Wände (52, 54) mit Löchern (56, 58) zum Abströmen der Flüssigkeit nach außen und eine Anzahl von Verteilerrohranordnungen (62) aufweisen, die außen an den Längrinnen (49) angebracht sind und unterhalb der Längsrinnen abhängen, um aus diesen Flüssigkeit ausströmen zu lassen und jede Verteilerrohranordnung in Fließverbindung mit zumindest einem der Löcher (56, 58) steht,
**dadurch gekennzeichnet,**
daß im wesentlichen alle Verteilerrohranordnungen (62) einen ersten Kanalabschnitt (64) mit hauptsächlich U-förmigem Querschnitt, dessen Grundfläche gegen eine Rohrseitenwand (52, 54) anliegt und der zumindest eine Öffnung (57, 59) enthält, die mit einem Loch (56, 58) in dieser Rohrseitenwand fluchtet, und einen zweiten Kanalabschnitt (72) von hauptsächlich V-förmigem Querschnitt aufweisen, den der erste Kanalabschnitt (64) entfernbar aufnimmt, wobei seine offene Fläche der Grundfläche (60) des ersten Kanalabschnitts (64) zugewandt ist.

2. Flüssigkeitsverteiler nach Anspruch 1, wobei jeder erste Kanalabschnitt (64) mit einer Wand (52, 54) einer zugehörigen Längsrinne (49) verschraubt ist.

3. Flüssigkeitsverteiler nach Anspruch 1, wobei jeder erste Kanalabschnitt (64) mit einer Wand (52, 54) einer zugehörigen Längsrinne (49) verschweißt ist.

4. Flüssigkeitsverteiler nach jedem der voranstehenden Ansprüche 1 bis 3, wobei die Seiten (68, 70) des ersten Kanalabschnitts (64) in Richtung weg von der Grundfläche konvergieren.

5. Flüssigkeitsverteiler nach Anspruch 4, wobei die Seiten (68, 70) des ersten Kanalabschnittes (64) im wesentlichen symmetrisch konvergieren.

6. Flüssigkeitsverteiler nach jedem der voranstehenden Ansprüche 1 bis 5, wobei der zweite Kanalabschnitt (72) innerhalb des ersten Kanalabschnittes (64) gleitbar montiert ist.

7. Flüssigkeitsverteiler nach Anspruch 6, wobei der zweite Kanalabschnitt (72) innerhalb des ersten Kanalabschnittes (64) durch einen Stift (99) gesichert ist, der im ersten Kanalabschnitt (64) angeordnet ist.

8. Flüssigkeitsverteiler nach Anspruch 6, enthaltend Rückhalteteile, die im ersten Kanalabschnitt (64) angeordnet sind, um den zweiten Kanalabschnitt (72) innerhalb des ersten Kanalabschnittes (64) zu halten.

9. Flüssigkeitsverteiler nach Anspruch 8, wobei die Rückhalteteile einen einwärts gebauchten Bereich (84, 86) des ersten Kanalabschnittes (64) umfassen, der den Durchgang des zweiten Kanalabschnittes (72) verhindert.

10. Flüssigkeitsverteiler nach jedem der voranstehenden Ansprüche 1 bis 9, wobei die Längsrinnen (49) hauptsächlich in zueinander paralleler Beziehung, über die Fläche beabstandet, angeordnet sind.

11. Flüssigkeitsverteiler nach Anspruch 10, wobei die Längsrinnen (49) einen Kastenaufbau aufweisen, mit hauptsächlich parallelen Seitenwänden (52, 54) und einem im wesentlchen ebenen Bodenabschnitt (60).

12. Flüssigkeitsverteiler nach jedem der voranstehenden Ansprüche 1 bis 11, wobei Enden ausgewählter Längsrinnen (49) mit winkelförmigen Endabschnitten (79) konstruiert sind, um die Sicherung innerhalb zylindrischer Prozeßkolonnen (10) zu ermöglichen.

13. Flüssigkeitsverteiler nach Anspruch 12, wobei bestimmte Längsrinnen (49) winkelförmige Endabschnitte (79) reduzierter Länge aufweisen.

14. Flüssigkeitsverteiler nach jedem der voranstehenden Ansprüche 1 bis 13, wobei die Verteilerrohranordnungen (62) in einer im wesentlichen parallel zueinander beabstandeten Beziehung angeordnet sind.

15. Flüssigkeitsverteiler nach jedem der voranstehenden Ansprüche 1 bis 14, wobei zumindest einige der Verteilerrohranordnungen (62) in Fließverbindung mit zumindest zweien der Löcher (52, 54) in den Rinnenseitenwänden (52, 54) stehen.

16. Flüssigkeitsverteiler nach Anspruch 15, wobei die besagten Löcher (56, 58) übereinander ausgebildet sind und das eine Loch (58) größer als das andere Loch (56) ist.

## Revendications

1. Distributeur de flux de liquide (48) à disposer dans une colonne de traitement (10) par-dessus une section de garnissage (14) pour la diffusion de liquide, vers le bas, à travers celle-ci, lequel distributeur a une pluralité d'auges allongées (49) espacées sur la surface de celui-ci, pour fournir une diffusion substantiellement uniforme de liquide, les auges étant formées avec des parois latérales opposées (52, 54) ayant des trous (56, 58) pour l'écoulement du liquide à l'extérieur de celles-ci, et une pluralité d'assemblages de tubes de distributeur (62) placés à l'extérieur des auges (49), et suspendus en dessous des auges (49) pour décharger le liquide de celles-ci, chaque assemblage de tubes étant en communication d'écoulement avec au moins un des trous (56, 58),
caractérisé en ce que
sensiblement tous les assemblages de tubes (62) comprennent chacun une première section de canal (64), ayant en coupe la forme générale d'un U, avec sa base reposant contre une paroi latérale d'auge (52, 54) et au moins une ouverture (57, 59) correspondant avec un trou (56, 58) dans cette paroi latérale, et une seconde section de canal (72), ayant en coupe la forme générale d'un V, reçue de manière amovible dans la première section (64) avec sa surface ouverte contre la base (66) de la première section (64).

2. Distributeur selon la revendication 1, dans lequel chaque première section de canal (64) est boulonnée à une paroi (52, 54) d'une auge (49) respective.

3. Distributeur selon la revendication 1, dans lequel chaque première section de canal (64) est soudée à une paroi (52, 54) d'une auge (49) respective.

4. Distributeur selon l'une quelconque des revendications précédentes, dans lequel les côtés (68, 70) de la première section de canal (64) convergent dans une direction s'éloignant de la base de celui-ci.

5. Distributeur selon la revendication 4, dans lequel les côtés (68, 70) de la première section de canal (64) convergent sensiblement symétriquement.

6. Distributeur selon l'une quelconque des revendications précédentes, dans lequel la seconde section de canal (72) est montée de manière à pouvoir coulisser dans la première section de canal (64).

7. Distributeur selon la revendication 6, dans lequel la seconde section de canal (72) est fixée dans la première section de canal (64) par une clavette (99) placée dans la première section de canal (64).

8. Distributeur selon la revendication 6, comprenant des moyens de retenue placés dans la première section de canal (64) pour maintenir la seconde section de canal (72) dans la première section de canal (64).

9. Distributeur selon la revendication 8, dans lequel les moyens de retenue comprennent une région évasée vers l'intérieur (84, 86) de la première section de canal (64) pour empêcher le passage à travers celle-ci de la seconde section de canal (72).

10. Distributeur selon l'une quelconque des revendications précédentes, dans lequel les auges (49) sont placées dans une relation espacée, sensiblement en parallèle, sur la surface de celui-ci.

11. Distributeur selon la revendication 10, dans lequel lesdites auges (49) sont construites en forme de boîte avec des parois latérales généralement parallèles (52, 54) et une section de fond sensiblement plate (60).

12. Distributeur selon l'une quelconque des revendications précédentes, dans lequel des extrémités sélectionnées des auges (49) sont construites avec des sections angulaires (79) pour faciliter la fixation dans des colonnes de traitement cylindriques (10).

13. Distributeur selon la revendication 12, dans lequel certaines des auges (49) ayant des sections d'extrémités angulaires (79) sont de longueur réduite.

14. Distributeur selon l'une quelconque des revendications précédentes, dans lequel les assemblages de tubes de distributeur (62) sont placés dans une relation espacée, sensiblement en parallèle.

15. Distributeur selon l'une quelconque des revendications précédentes, dans lequel au moins certains des assemblages de tubes (62) sont en communication d'écoulement avec au moins deux des trous (56, 58) dans les parois latérales d'auge (52, 54).

16. Distributeur selon la revendication 15, dans lequel lesdits deux trous (56, 58) sont formés l'un au-dessus de l'autre, et dans lequel l'un (58) est plus grand que l'autre (56).
